(19) Europäisches Patentamt
European Patent Office
Office européen des brevets

(11) **EP 2 112 356 B1**

(12) **EUROPÄISCHE PATENTSCHRIFT**

(45) Veröffentlichungstag und Bekanntmachung des Hinweises auf die Patenterteilung:
**11.11.2015 Patentblatt 2015/46**

(21) Anmeldenummer: **09002499.3**

(22) Anmeldetag: **21.02.2009**

(51) Int Cl.:
*F02D 41/14* (2006.01)     *F02D 23/02* (2006.01)
*F02D 21/08* (2006.01)     *F02M 25/07* (2006.01)
*F02D 41/00* (2006.01)     *F01N 3/021* (2006.01)
*F02B 29/04* (2006.01)     *F02B 37/00* (2006.01)
*F02D 9/04* (2006.01)

(54) **Verfahren zum betreiben einer Brennkraftmaschine**

Method for operating a combustion engine

Procédé destiné au fonctionnement d'un moteur à combustion interne

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **23.04.2008 DE 102008020477**

(43) Veröffentlichungstag der Anmeldung:
**28.10.2009 Patentblatt 2009/44**

(73) Patentinhaber: **Volkswagen Aktiengesellschaft 38440 Wolfsburg (DE)**

(72) Erfinder:
• **Mannigel, Dieter**
  **38116 Braunschweig (DE)**
• **Heuck, Markus**
  **38114 Braunschweig (DE)**
• **Eickhorn, Mike**
  **38114 Braunschweig (DE)**
• **Pohl, Detlev**
  **59939 Olsberg (DE)**

(56) Entgegenhaltungen:
EP-A2- 1 420 159     DE-A1-102005 026 503
JP-A- 2006 336 547     JP-A- 2008 038 627

**Beschreibung**

Die Erfindung betrifft ein Verfahren zum Betreiben einer Brennkraftmaschine, insbesondere eines Kraftfahrzeugs, mit einem Frischlufttrakt, einem Abgastrakt und einem Abgasturbolader, welcher einen in dem Frischlufttrakt angeordneten Verdichter und eine in dem Abgastrakt angeordnete Turbine aufweist, wobei Abgas aus dem Abgastrakt stromauf der Turbine entnommen und über eine erste Abgasrückführungsleitung (HD-AGR-Leitung) an eine Stelle stromab des Verdichters in den Frischlufttrakt zurück geführt wird (Hochdruckabgasrückführung - HD-AGR) sowie Abgas aus dem Abgastrakt stromab der Turbine entnommen und über eine zweite Abgasrückführungsleitung (ND-AGR-Leitung) an eine Stelle stromauf des Verdichters in den Frischlufttrakt zurück geführt wird (Niederdruckabgasrückführung - ND-AGR), wobei eine Rate für die ND-AGR $r_{ND-AGR}$ mittels eines ND-AGR-Ventils eingestellt wird, wobei mittels einer Abgasklappe im Abgastrakt der Brennkraftmaschine stromab der Entnahme der ND-AGR ein Abgasgegendruck eingestellt wird, gemäß dem Oberbegriff des Patentanspruchs 1.

Aus der JP 2006 336547 A ist eine aufgeladene Brennkraftmaschine mit einer ND-AGR und einer HD-AGR bekannt. Die AGR-Mengen über die ND-AGR und die HD-AGR sind mittels einer Steuervorrichtung über jeweils ein Regelventil steuerbar. Dabei wird mittels Drucksensoren der Differenzdruck über den Regelventilen bestimmt und basierend auf diesen Differenzdrücken Soll-AGR-Mengen bestimmt und mittels der Regelventile eingestellt.

Der Erfindung liegt die Aufgabe zugrunde, ein Verfahren der o.g. Art hinsichtlich der Steuerung bzw. Regelung von Massenströmen im Frischlufttrakt und im Abgastrakt zu verbessern.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Verfahren der o.g. Art erfindungsgemäß vorgesehen, dass aus einem Differenzdruck zwischen einer Stelle im Frischlufttrakt, an der die ND-AGR-Leitung in den Frischlufttrakt mündet oder stromauf dieser Stelle, und einer Stelle im Abgastrakt, an der die ND-AGR-Leitung vom Abgastrakt abzweigt oder stromab dieser Stelle, mittels eines Drosselmodells ein Ist-Wert $r_{ND-AGR-IST}$ der AGR-Rate bestimmt wird, wobei die Abgasklappe derart eingestellt wird, dass der Differenzdruck unabhängig von einem momentanen Betriebspunkt der Brennkraftmaschine einen vorbestimmten Wert überschreitet, damit ein gewünschter Abgasmassenstrom $\dot{m}_{ND-AGR}$ erreicht wird, wobei auch für den Fall, dass das natürliche Druckgefälle für den gewünschten Abgasmassenstrom $\dot{m}_{ND-AGR}$ ausreichen würde, die Abgasklappe nicht vollständig geöffnet wird.

Dies hat den Vorteil, dass in jedem Betriebspunkt der Brennkraftmaschine ein betriebspunktunabhängiger Druckvorhalt über die ND-AGR-Leitung zur Verfügung steht, so dass numerische Instabilitäten im Drosselmodell durch einen zu kleinen Wert für den Differenzdruck wirksam vermieden sind. Gleichzeitig wird auch das Nutzsignal bei gleich bleibenden Sensorfehlern (Offset, Drift) und damit die Modellierungsgüte erhöht.

Zweckmäßigerweise wird eine Ventilstellung des ND-AGR-Ventils aus einem Sollwert $r_{ND-AGR-SOLL}$ und Istwert $r_{ND-AGR-IST}$ für die AGR-Rate $r_{ND-AGR}$ bestimmt.

In einer bevorzugten Ausführungsform wird der vorbestimmte Wert für den Differenzdruck derart gewählt, dass Ladungswechselverluste der Brennkraftmaschine aufgrund der Stellung der Abgasklappe einen vorbestimmten Wert unterschreiten.

Zweckmäßigerweise werden Werte für eine Temperatur im Abgastrakt stromab eines im Abgastrakt angeordneten Dieselpartikelfilters und einen Umgebungsdruck gemessen sowie Werte für eine Position des ND-AGR-Ventils bestimmt, wobei diese Werte zusammen mit dem Differenzdruck dem Drosselmodell als Eingangsgrößen zugeführt werden.

Beispielsweise wird der vorbestimmte Wert für den Differenzdruck aus einem Modell bestimmt.

Zweckmäßigerweise wird wenigstens einer der folgenden Werte aus dem Drosselmodell bestimmt und/oder gemessen, ein Druck $p_0$ im Frischlufttrakt stromauf eines Luftfilters; eine Temperatur $T_0$ im Frischlufttrakt stromauf eines Luftfilters; ein Frischluftmassendurchsatz $m_0$ im Frischlufttrakt stromab des Luftfilters und stromauf des Verdichters; ein Druck $p_{01}$ im Frischlufttrakt stromab eines HFM und stromauf des Verdichters; eine Temperatur $T_1$ im Frischlufttrakt stromab des HFM und stromauf des Verdichters; ein Druck $p_1$ im Frischlufttrakt stromab des HFM und stromauf des Verdichters; ein Massendurchsatz $m_{11}$ im Frischlufttrakt stromab des HFM und stromauf des Verdichters; ein Druck $p_{12}$ im Frischlufttrakt am Einlass des Verdichters; ein Druck $p_{20}$ im Frischlufttrakt am Auslass des Verdichters; eine Temperatur $T_2$ im Frischlufttrakt stromab eines Ladeluftkühlers und stromauf einer Drosselklappe; ein Druck $p_2$ im Frischlufttrakt stromab eines Ladeluftkühlers und stromauf einer Drosselklappe; ein Massendurchsatz $m_{21}$ im Frischlufttrakt im Bereich einer Einmündung der HD-AGR-Leitung in den Frischlufttrakt; eine Temperatur $T_{22}$ im Frischlufttrakt stromab der Einmündung der HD-AGR-Leitung in den Frischlufttrakt; ein Druck $p_{22}$ im Frischlufttrakt stromab der Einmündung der HD-AGR-Leitung in den Frischlufttrakt; ein Massendurchsatz $m_{22}$ im Frischlufttrakt stromab der Einmündung der HD-AGR-Leitung in den Frischlufttrakt; eine Masse der Zylinderfüllung $m_f$; eine Temperatur $T_3$ im Abgastrakt stromauf der Abzweigung der HD-AGR-Leitung von dem Abgastrakt; ein Massendurchsatz $m_{31}$ im Abgastrakt stromauf der Abzweigung der HD-AGR-Leitung von dem Abgastrakt; ein Druck $p_3$ im Abgastrakt an der Abzweigung der HD-AGR-Leitung von dem Abgastrakt; eine Temperatur $T_{32}$ im Abgastrakt stromab der Abzweigung der HD-AGR-Leitung von dem Abgastrakt und stromauf der Turbine; ein Massendurchsatz $m_{32}$ im Abgastrakt stromab der Abzweigung der HD-AGR-Leitung von dem Abgastrakt und stromauf der Turbine; eine Temperatur $T_4$ im Abgastrakt stromab der Turbine und stromauf eines Dieselpartikelfilters; eine Temperatur $T_{41}$ im Abgastrakt am Einlass des Dieselpartikelfilters; ein Druck $p_{41}$ im Abgastrakt am Einlass des Dieselpartikelfilters; ein Lambdawert $\lambda_{41}$ im Abgastrakt am Einlass des Dieselpartikelfilters; ein Differenzdruck $dp_{PF}$ im Abgastrakt zwischen dem Einlass und einem Auslass des Dieselpartikelfilters; eine Temperatur $T_{42}$ im Abgastrakt am Auslass des Dieselpartikelfilters; ein Druck $p_{42}$ im Abgastrakt am Auslass des Dieselpartikelfilters; ein Massendurchsatz $m_{42}$ im Abgastrakt am Auslass des Dieselpartikelfilters; eine Temperatur $T_{43}$ im Abgastrakt stromab einer Abzweigung der ND-AGR-Leitung vom Abgastrakt und stromauf eines $NO_x$-Speicherka-talysators; ein Massendurchsatz $m_{43}$ im Abgastrakt stromab einer Abzweigung der ND-AGR-Leitung vom Abgastrakt und stromauf eines $NO_x$-Speicherkatalysators; ein Lambdawert $\lambda_{43}$ im Abgastrakt stromab des $NO_x$-Speicherkatalysa-tors und stromauf der Abgasklappe; ein Druck $p_{43}$ im Abgastrakt stromab der Abgasklappe und stromauf eines $H_2S$-Katalysators; und/oder ein Druck $p_0$' im Abgastrakt stromab eines Schalldämpfers.

Um die Genauigkeit der modellierten Signale sowohl über die Lebensdauer als auch über Serienstreuung sicherzustellen ist eine Parameteradaption dadurch realisiert, dass wenigstens ein aus dem Drosselmodell bestimmter Wert für einen bestimmten Parameter der Brennkraftmaschine mit einem gemessenen Wert für diesen Parameter der Brennkraftmaschine verglichen wird und in Abhängigkeit von einer Differenz zwischen den beiden Werten wenigstens ein Parameter des Drosselmodells derart verändert wird, dass der aus dem Drosselmodell bestimmte Wert dem gemessenen Wert entspricht.

Alternativ oder zusätzlich wird wenigstens ein aus dem Drosselmodell bestimmter Wert für einen bestimmten Parameter der Brennkraftmaschine mit einem auf anderem Wege aus dem Drosselmodell bestimmten Wert für diesen Parameter verglichen und in Abhängigkeit von einer Differenz zwischen den beiden Werten wenigstens ein Parameter des Drosselmodells derart verändert, dass die Differenz minimal wird.

Die Erfindung wird im Folgenden anhand der Zeichnung näher erläutert. Diese zeigt in der einzigen Fig. eine schematische Darstellung des erfindungsgemäßen Verfahrens.

Das aus der einzigen Fig. ersichtliche Verfahren dient zum Betreiben einer Brennkraftmaschine mit einem Frischlufttrakt 10, einem Abgastrakt 12 und einem Abgasturbolader 14, welcher einen in dem Frischlufttrakt 10 angeordneten Verdichter 16 und eine in dem Abgastrakt 12 angeordnete Turbine 18 aufweist, wobei Abgas aus dem Abgastrakt 12 stromauf der Turbine 18 entnommen und über eine erste Abgasrückführungsleitung 20 (HD-AGR-Leitung 20) an eine Stelle stromab des Verdichters 16 in den Frischlufttrakt 10 zurück geführt wird (Hochdruckabgasrückführung - HD-AGR) sowie Abgas aus dem Abgastrakt 12 stromab der Turbine 18 entnommen und über eine zweite Abgasrückführungsleitung (ND-AGR-Leitung 22) an eine Stelle stromauf des Verdichters 16 in den Frischlufttrakt 10 zurück geführt wird (Niederdruckabgasrückführung - ND-AGR). Eine Rate für die ND-AGR $r_{ND-AGR}$ wird mittels eines ND-AGR-Ventils 24 eingestellt. Eine Rate für die HD-AGR $r_{HD-AGR}$ wird mittels eines HD-AGR-Ventils 26 eingestellt. Mittels einer Abgasklappe 28 im Abgastrakt 12 wird der Brennkraftmaschine stromab der Entnahme der ND-AGR ein Abgasgegendruck eingestellt. In der ND-AGR-Leitung 22 ist ein AGR-Kühler 30 angeordnet. In dem Frischlufttrakt 10 ist stromab des Verdichters 16 ein Ladeluftkühler 32 sowie eine Drosselklappe 34 angeordnet. In dem Abgastrakt 12 ist stromauf der Turbine 18 eine Bypassklappe 36 und stromab der Turbine 18 ein Dieselpartikelfilter 38 angeordnet.

Ein Differenzdrucksensor 40 misst eine Druckdifferenz $\Delta p$ über die ND-AGR-Leitung 22. Gemäß einer Sensorik wird bei 42 eine Temperatur stromab des Dieselpartikelfilters 38 gemessen. Weiterhin wird ein Umgebungsdruck, eine Position des ND-AGR-Ventils 24 sowie eine Position der Abgasklappe 28 gemessen.

Aus den vorgenannten Messwerten wird aus einem Modell die AGR-Rate $r_{ND-AGR}$ bestimmt. Das Modell modelliert hierbei den Kühler 30, das ND-AGR-Ventil 24 und einen ND-AGR-Filter als ein Bauteil. Der Massenstrom ist dann mittels eines Drosselmodells über Näherungen darstellbar.

$$P_{vorVerdichter} \approx p_0$$

$$P_{vorND-AGR} \approx \Delta p + p_0$$

$$\dot{m}_{ND-AGR} = f(p_{vorVerdichter}, p_{vorND-AGR}, T_{nachDPF}, S_{ND-AGR-Ventil}$$

$$= \Psi \cdot P_{vorNDAGR} \cdot \sqrt{\frac{2}{R_{Abgas} \cdot T_{nachDPF}}} \cdot f(S_{ND-AGR-Ventil})$$

$$r_{ND-AGR} = \frac{\dot{m}_{ND-AGR}}{\dot{m}_{ND-AGR} + \dot{m}_{HFM}}$$

Hierbei ist $p_{vorVerdichter}$ ein Druck stromauf des Verdichters 16, $p_{vorND-AGR}$ ein Druck stromauf der ND-AGR-Leitung 22, $T_{nachDPF}$ die Temperatur 42 nach dem Dieselpartikelfilter 38, $p_0$ der Umgebungsdruck und $S_{ND-AGR-Ventil}$ eine Stellung oder Position des ND-AGR-Ventils 24, $r_{ND-AGR}$ eine Rate der ND-AGR, $\dot{m}_{ND-AGR}$ ein Massenstrom der ND-AGR, $\Psi$ eine Durchflussfunktion und $\dot{m}_{HFM}$ ein Massenstrom über einen Heißfilm-Luftmassenmesser ist.

Das Luftsystem regelt über eine ausgewählte Sensorkonfiguration eine AGR-Rate über die Überströmleitung 22 im Niederdruckbereich mit dem ND-AGR-Ventil 24 und der Abgasklappe 28. Ein Istwert für die AGR-Rate wird mit Hilfe des $\Delta$p-Sensors 40, eines HFMs (nicht dargestellt), des Temperatursensors 42 und des Umgebungsdrucks $p_0$ bestimmt. Mit Hilfe von ausgewählten Näherungen wird mit Hilfe des Drosselmodells das Durchflussverhalten des ND-AGR-Kühlers 30 und des ND-AGR-Ventils 24 in hoher Güte nachgebildet. Fehler durch Alterung und Bauteiltoleranzen werden durch den Einsatz der dargestellten Sensorik vermieden.

Die Abgasklappe 28 sorgt in jedem Betriebspunkt der Brennkraftmaschine für ein notwendiges Druckgefälle über der ND-AGR-Leitung 22, damit ein notwendiger Abgasmassenstrom $\dot{m}_{ND-AGR}$ erreicht wird. Auch für den Fall, dass das natürliche Druckgefälle für den gewünschten Abgasmassenstrom $\dot{m}_{ND-AGR}$ ausreichen würde, wird die Abgasklappe 28 nicht vollständig geöffnet. Sie sorgt in diesem Fall für einen betriebspunktabhängigen Druckvorhalt, da bei zu kleinen Druckgefällen das Drosselmodell Instabilitäten aufweist. Das ND-AGR-Ventil 24 regelt modellbasiert die ND-AGR-Rate $r_{ND-AGR}$ ein.

Das Luftsystem regelt drei Sollwerte ein. 1. Frischluftmasse, 2. ND-AGR-Rate, 3. HD-AGR-Rate. Die Sollwerte für die ND-AGR-Rate werden in Sollwerte für einzelne AGR-Massenströme transformiert. Die Abgasklappe 28 sorgt für einen Druckvorhalt über der ND-AGR-Leitung 22, damit die Drosselgleichung stabil berechnet werden kann. Das ND-AGR-Ventil 24 regelt modellbasiert die AGR-Rate ein, die mit Hilfe des $\Delta$p-Sensors, des HFMs und des Temperatursensors 42 modelliert wird. Die Drosselklappe 34 regelt einen Frischluftmassensollwert ein.

Wie aus der einzigen Fig. ersichtlich, sind in einer Reglereinheit 44 folgende Werte hinterlegt, ein Sollwert 46 für einen Luftmassenstrom, ein Sollwert 48 für die HD-AGR-Rate und ein Sollwert 50 für die ND-AGR-Rate. Der Sollwert 46 für den Luftmassenstrom wird kennfeldbasiert oder modellbasiert durch die Drosselklappe 34 eingeregelt. Der Sollwert 48 für die HD-AGR-Rate und der Sollwert 50 für die ND-AGR-Rate werden in einer Sollwerttransformation 54 jeweils in einen HD-AGR-Massenstrom und einen ND-AGR-Massenstrom umgewandelt. Der ND-AGR-Massenstrom wird einer modellbasierten Steuerung 56 für das ND-AGR-Ventil 24 zugeführt. Der HD-AGR-Massenstrom wird einer modellbasierten Steuerung 58 für das HD-AGR-Ventil 26 zugeführt. Ein Regler 60 überlagert jeweils den Ausgangssignalen der modellbasierten Steuerungen 56, 58 für die ND-AGR-Ventil 24 und das HD-AGR-Ventil 26 ein Reglersignal. Aus den Eingangswerten Motordrehzahl $n_{Mot}$ und einer Einspritzmenge $q_{Mot}$ wird in einer Steuerung 62 aus einem Kennfeld ein Stellwert für die Abgasklappe 28 bestimmt und der Abgasklappe 28 zugeführt.

Beispielsweise erhält die Abgasklappe aus einem Drehzahl-Menge-Kennfeld einen Steuerwert, der so abgestimmt ist, dass sich ein notwendiger Differenzdruck einstellt. In einer alternativen Ausführung können betriebspunktabhängige Differenzdrucksollwerte herausgefahren werden, die dann durch einen weiteren Regelkreis eingestellt werden. Dabei wird die Abgasklappe modellbasiert bereits so genau vorgesteuert, dass nur geringe Regeleingriffe notwendig sind. Die Berechnungsvorschrift für die effektive Durchströmungsfläche ergibt sich dabei über

$$A_{AKL} = \frac{\dot{m}_{Turbine} - \dot{m}_{Soll,NDAGR}}{\Psi\left(\dfrac{p_0}{p_0 + \Delta p_{Soll}}\right) \cdot (p_0 + \Delta p_{Soll})} \cdot \sqrt{\frac{R_{Luft} \cdot T_{nachDPF}}{2}}$$

mit

$$\Psi\left(\frac{p_{nach}}{p_{vor}}\right) = \begin{cases} \Psi_{Max} & : \dfrac{p_{nach}}{p_{vor}} < \prod_{Krit} \\[2em] \sqrt{\dfrac{\kappa_{Gas}}{\kappa_{Gas}-1}\left[\left(\dfrac{p_{nach}}{p_{vor}}\right)^{\frac{2}{\kappa_{Gas}}} - \left(\dfrac{p_{nach}}{p_{vor}}\right)^{\frac{\kappa_{Gas}+1}{\kappa_{Gas}}}\right]} & : \prod_{Krit} < \dfrac{p_{nach}}{p_{vor}} < 1 \\[2em] -\sqrt{\dfrac{\kappa_{Gas}}{\kappa_{Gas}-1}\left[\left(\dfrac{p_{nach}}{p_{vor}}\right)^{\frac{2}{\kappa_{Gas}}} - \left(\dfrac{p_{nach}}{p_{vor}}\right)^{\frac{\kappa_{Gas}+1}{\kappa_{Gas}}}\right]} & : \dfrac{p_{nach}}{p_{vor}} > 1 \end{cases}$$

Hierbei ist $P_{nach}$ ein Druck stromabwärts der Drosselstelle, $P_{vor}$ ein Druck stromaufwärts der Drosselstelle, $P_{nach} = P_{vorVerdichter}$, $p_{vor} = p_{vorNDAGR}$, $p_{nach} = p_0$ und $p_{vor} = p_0 + \Delta p_{SoU}$. Der Ausdruck "Gas" bezeichnet jeweils das betroffen Gas, also beispielsweise Abgas.

Diese Durchströmungsfläche lässt sich mit Hilfe einer nichtlinearen Übertragungsfunktion auf eine eindeutige Klappenstellung abbilden

## Patentansprüche

1. Verfahren zum Betreiben einer Brennkraftmaschine, insbesondere eines Kraftfahrzeugs, mit einem Frischlufttrakt (10), einem Abgastrakt (12) und einem Abgasturbolader (14), welcher einen in dem Frischlufttrakt (10) angeordneten Verdichter (16) und eine in dem Abgastrakt (12) angeordnete Turbine (18) aufweist, wobei Abgas aus dem Abgastrakt (12) stromauf der Turbine (18) entnommen und über eine erste Abgasrückführungsleitung (HD-AGR-Leitung 20) an eine Stelle stromab des Verdichters (16) in den Frischlufttrakt (10) zurück geführt wird (Hochdruckabgasrückführung - HD-AGR) sowie Abgas aus dem Abgastrakt (12) stromab der Turbine (18) entnommen und über eine zweite Abgasrückführungsleitung (ND-AGR-Leitung 22) an eine Stelle stromauf des Verdichters (16) in den Frischlufttrakt (10) zurück geführt wird (Niederdruckabgasrückführung - ND-AGR), wobei eine Rate für die ND-AGR $r_{ND-AGR}$ mittels eines ND-AGR-Ventils (24) eingestellt wird, wobei mittels einer Abgasklappe (28) im Abgastrakt (12) der Brennkraftmaschine stromab der Entnahme der ND-AGR ein Abgasgegendruck eingestellt wird, wobei aus einem Differenzdruck zwischen einer Stelle im Frischlufttrakt (10), an der die ND-AGR-Leitung (22) in den Frischlufttrakt (10) mündet oder stromauf dieser Stelle, und einer Stelle im Abgastrakt (12), an der die ND-AGR-Leitung (22) vom Abgastrakt (12) abzweigt oder stromab dieser Stelle, mittels eines Drosselmodells ein Ist-Wert $r_{ND-AGR-IST}$ der AGR-Rate bestimmt wird, und wobei die Abgasklappe (28) derart eingestellt wird, dass der Differenzdruck unabhängig von einem momentanen Betriebspunkt der Brennkraftmaschine einen vorbestimmten Wert überschreitet, damit ein gewünschter Abgasmassenstrom $\dot{m}_{ND-AGR}$ erreicht wird, **dadurch gekennzeichnet, dass** auch für den Fall, dass das natürliche Druckgefälle für den gewünschten Abgasmassenstrom $\dot{m}_{ND-AGR}$ ausreichen würde, die Abgasklappe (28) nicht vollständig geöffnet wird.

2. Verfahren nach Anspruch 1, **dadurch gekennzeichnet, dass** eine Ventilstellung des ND-AGR-Ventils (24) aus einem Sollwert $r_{ND-AGR-SOLL}$ und Istwert $r_{ND-AGR-IST}$ für die AGR-Rate $r_{ND-AGR}$ bestimmt wird.

3. Verfahren nach wenigstens einem der vorhergehenden Ansprüche, **dadurch gekennzeichnet, dass** der vorbestimmte Wert für den Differenzdruck derart gewählt wird, dass Ladungswechselverluste der Brennkraftmaschine aufgrund der Stellung der Abgasklappe (28) einen vorbestimmten Wert unterschreiten.

4. Verfahren nach wenigstens einem der vorhergehenden Ansprüche, **dadurch gekennzeichnet, dass** Werte für eine Temperatur im Abgastrakt (12) stromab eines im Abgastrakt (12) angeordneten Dieselpartikelfilters(38) und einen Umgebungsdruck gemessen sowie Werte für eine Position des ND-AGR-Ventils (24) bestimmt werden, wobei diese Werte zusammen mit dem Differenzdruck dem Drosselmodell als Eingangsgrößen zugeführt werden.

5. Verfahren nach wenigstens einem der vorhergehenden Ansprüche, **dadurch gekennzeichnet, dass** der vorbestimmte Wert für den Differenzdruck aus einem Modell bestimmt wird.

6. Verfahren nach wenigstens einem der vorhergehenden Ansprüche, **dadurch gekennzeichnet, dass** wenigstens einer der folgenden Parameter der Brennkraftmaschine aus dem Drosselmodell bestimmt und/oder gemessen wird, ein Druck $p_0$ im Frischlufttrakt (10) stromauf eines Luftfilters; eine Temperatur $T_0$ im Frischlufttrakt (10) stromauf eines Luftfilters; ein Frischluftmassendurchsatz $m_0$ im Frischlufttrakt (10) stromab des Luftfilters und stromauf des Verdichters (16); ein Druck $p_{01}$ im Frischlufttrakt (10) stromab eines HFM und stromauf des Verdichters (16); eine Temperatur $T_1$ im Frischlufttrakt (10) stromab des HFM und stromauf des Verdichters (16); ein Druck $p_1$ im Frischlufttrakt (10) stromab des HFM und stromauf des Verdichters (16); ein Massendurchsatz $m_{11}$ im Frischlufttrakt (10) stromab des HFM und stromauf des Verdichters (16); ein Druck $p_{12}$ im Frischlufttrakt (10) am Einlass des Verdichters (16); ein Druck $p_{20}$ im Frischlufttrakt (10) am Auslass des Verdichters (16); eine Temperatur $T_2$ im Frischlufttrakt (10) stromab eines Ladeluftkühlers (32) und stromauf einer Drosselklappe (34); ein Druck $p_2$ im Frischlufttrakt (10) stromab eines Ladeluftkühlers (32) und stromauf einer Drosselklappe (34); ein Massendurchsatz $m_{21}$ im Frischlufttrakt (10) im Bereich einer Einmündung der HD-AGR-Leitung (20) in den Frischlufttrakt (10); eine Temperatur $T_{22}$ im Frischlufttrakt (10) stromab der Einmündung der HD-AGR-Leitung (20) in den Frischlufttrakt (10); ein Druck $p_{22}$ im Frischlufttrakt (10) stromab der Einmündung der HD-AGR-Leitung (20) in den Frischlufttrakt (10); ein Massendurchsatz $m_{22}$ im Frischlufttrakt (10) stromab der Einmündung der HD-AGR-Leitung (20) in den Frischlufttrakt (10); eine Masse der Zylinderfüllung $m_f$; eine Temperatur $T_3$ im Abgastrakt (12) stromauf der Abzweigung der HD-AGR-Leitung (20) von dem Abgastrakt (12); ein Massendurchsatz $m_{31}$ im Abgastrakt (12) stromauf der Abzweigung der HD-AGR-Leitung (20) von dem Abgastrakt (12); ein Druck $p_3$ im Abgastrakt (12) an der Abzweigung der HD-AGR-Leitung (20) von dem Abgastrakt (12); eine Temperatur $T_{32}$ im Abgastrakt (12) stromab der Abzweigung der HD-AGR-Leitung (20) von dem Abgastrakt (12) und stromauf der Turbine (18); ein Massendurchsatz $m_{32}$ im Abgastrakt (12) stromab der Abzweigung der HD-AGR-Leitung (20) von dem Abgastrakt (12) und stromauf der Turbine (18); eine Temperatur $T_4$ im Abgastrakt (12) stromab der Turbine (18) und stromauf eines Dieselpartikelfilters (38); eine Temperatur $T_{41}$ im Abgastrakt (12) am Einlass des Dieselpartikelfilters (38); ein Druck $p_{41}$ im Abgastrakt (12) am Einlass des Dieselpartikelfilters (38); ein Lambdawert $\lambda_{41}$ im Abgastrakt (12) am Einlass des Dieselpartikelfilters (38); ein Differenzdruck $dp_{PF}$ im Abgastrakt (12) zwischen dem Einlass und einem Auslass des Dieselpartikelfilters (38); eine Temperatur $T_{42}$ im Abgastrakt (12) am Auslass des Dieselpartikelfilters (38); ein Druck $p_{42}$ im Abgastrakt (12) am Auslass des Dieselpartikelfilters (38); ein Massendurchsatz $m_{42}$ im Abgastrakt (12) am Auslass des Dieselpartikelfilters (38); eine Temperatur $T_{43}$ im Abgastrakt (12) stromab einer Abzweigung der ND-AGR-Leitung (22) vom Abgastrakt (12) und stromauf eines $NO_x$-Speicherkatalysators; ein Massendurchsatz $m_{43}$ im Abgastrakt (12) stromab einer Abzweigung der ND-AGR-Leitung (22) vom Abgastrakt (12) und stromauf eines $NO_x$-Speicherkatalysators; ein Lambdawert $\lambda_{43}$ im Abgastrakt (12) stromab des $NO_x$-Speicherkatalysators und stromauf der Abgasklappe (28); ein Druck $p_{43}$ im Abgastrakt (12) stromab der Abgasklappe (28) und stromauf eines $H_2S$-Katalysators; und/oder ein Druck $p_0'$ im Abgastrakt (12) stromab eines Schalldämpfers.

7. Verfahren nach wenigstens einem der vorhergehenden Ansprüche, **dadurch gekennzeichnet, dass** wenigstens ein aus dem Drosselmodell bestimmter Wert für einen bestimmten Parameter der Brennkraftmaschine mit einem gemessenen Wert für diesen Parameter der Brennkraftmaschine verglichen wird und in Abhängigkeit von einer Differenz zwischen den beiden Werten wenigstens ein Parameter des Drosselmodells derart verändert wird, dass der aus dem Drosselmodell bestimmte Wert dem gemessenen Wert entspricht.

8. Verfahren nach wenigstens einem der vorhergehenden Ansprüche, **dadurch gekennzeichnet, dass** wenigstens ein aus dem Drosselmodell bestimmter Wert für einen bestimmten Parameter der Brennkraftmaschine mit einem auf anderem Wege aus dem Drosselmodell bestimmten Wert für diesen Parameter verglichen wird und in Abhängigkeit von einer Differenz zwischen den beiden Werten wenigstens ein Parameter des Drosselmodells derart verändert wird, dass die Differenz minimal wird.

**Claims**

1. Method for operating a combustion engine, in particular of a motor vehicle, having a fresh air section (10), an exhaust section (12) and an exhaust gas turbocharger (14), which has a compressor (16) arranged in the fresh air section (10) and a turbine (18) arranged in the exhaust section (12), wherein the exhaust gas from the exhaust section (12) is extracted upstream of the turbine (18) and fed back (high pressure exhaust gas recirculation HP-EGR) into the fresh air section (10) at a point downstream of the compressor (16) via a first exhaust gas recirculation line (HP-EGR line 20), and exhaust gas is extracted from the exhaust section (12) downstream of the turbine (18) and fed back (low pressure exhaust gas recirculation LP-EGR) into the fresh air section (10) at a point upstream of the compressor (16) via a second exhaust gas recirculation line (LP-EGR line 22), wherein a rate for the LP-EGR $r_{LP-EGR}$ is set by means of an LP-EGR valve (24), wherein an exhaust gas counterpressure is set downstream of the extraction of LP-EGR by means of an exhaust gas valve (28) in the exhaust section (12) of the combustion engine, wherein an actual value $r_{LP\text{-}EGR\text{-}ACT}$ of the EGR rate is determined from a differential pressure between a point in the fresh air section (10) at which the LP-EGR line (22) opens into the fresh air section (10), or upstream of this point, and a point in the exhaust section (12) at which the LP-EGR line (22) branches off from the exhaust section (12) or downstream of this point, by means of a throttle model, and wherein the exhaust gas valve (28) is set in such a way that the differential pressure exceeds a predetermined value independently of an instantaneous operating point of the combustion engine so that a desired gas mass flow $\dot{m}_{LP\text{-}EGR}$ is obtained, **characterized in that** the exhaust gas valve (28) is not completely open even in the event of the natural pressure gradient being sufficient for the desired exhaust gas mass flow $\dot{m}_{LP\text{-}EGR}$.

2. Method according to Claim 1, **characterized in that** a valve setting of the LP-EGR valve (24) is determined from a setpoint value $R_{LP\text{-}EGR\text{-}SET}$ and actual value $R_{LP\text{-}EGR\text{-}ACT}$ for the EGR rate $r_{LP\text{-}EGR}$.

3. Method according to at least one of the preceding claims, **characterized in that** the predetermined value for the differential pressure is selected such that charge change losses of the combustion engine owing to the setting of the exhaust gas valve (28) undershoot a predetermined value.

4. Method according to at least one of the preceding claims, **characterized in that** values of a temperature in the exhaust section (12) downstream of a diesel particle filter (38) arranged in the exhaust section (12) and an ambient pressure are measured as values for a position of the LP-EGR valve (24) are determined, wherein these values are fed to the throttle model as input variables together with the differential pressure.

5. Method according to at least one of the preceding claims, **characterized in that** the predetermined value for the differential pressure is determined from a model.

6. Method according to at least one of the preceding claims, **characterized in that** at least one of the following parameters of the combustion engine is determined from the throttle model and/or measured, a pressure $p_0$ in the fresh air section (10) upstream of an air filter; a temperature $T_0$ in the fresh air section (10) upstream of an air filter; a fresh air mass throughput rate $m_0$ in the fresh air section (10) downstream of the air filter and upstream of the compressor (16); a pressure $p_{01}$ in the fresh air section (10) downstream of an HFM and upstream of the compressor (16); a temperature $T_1$ in the fresh air section (10) downstream of the HFM and upstream of the compressor (16); a pressure $p_1$ in the fresh air section (10) downstream of the HFM and upstream of the compressor (16); a mass throughput rate $m_{11}$ in the fresh air section (10) downstream of the HFM and upstream of the compressor (16) ; a pressure $p_{12}$ in the fresh air section (10) at the inlet of the compressor (16); a pressure $p_{20}$ in the fresh air section (10) at the outlet of the compressor (16); a temperature $T_2$ in the fresh air section (10) downstream of a charge air cooler (32) and upstream of a throttle valve (34); a pressure $p_2$ in the fresh air section (10) downstream of a charge air cooler (32) and upstream of a throttle valve (34); a mass throughput rate $m_{21}$ in the fresh air section (10) in the region of a junction of the HP-EGR line (20) in the fresh air section (10); a temperature $T_{22}$ in the fresh air section (10) downstream of the junction of the HP-EGR line (20) in the fresh air section (10); a pressure $p_{22}$ in the fresh air section (10) downstream of the junction of the HP-EGR line (20) in the fresh air section (10); a mass throughput rate $m_{22}$ in the fresh air section (10) downstream of the junction of the HP-EGR line (20) in the fresh air section (10); a mass of the cylinder charge $m_f$; a temperature $T_3$ in the exhaust gas section (12) upstream of the branching of the HP-EGR line (20) from the exhaust section (12); a mass throughput rate $m_{31}$ in the exhaust section (12) upstream of the branching of the HP-EGR line (20) from the exhaust section (12); a pressure $p_3$ in the exhaust section (12) at the branching of the HP-EGR line (20) from the exhaust section (12); a temperature $T_{32}$ in the exhaust section (12) downstream of the branching of the HP-EGR line (20) from the exhaust section (12) and upstream of the turbine (18); a mass throughput rate $m_{32}$ in the exhaust section (12) upstream of the branching of the HP-EGR line (20) from the exhaust section (12) and upstream of the turbine (18); a temperature $T_4$ in the exhaust section (12) downstream of the turbine (18) and upstream of a diesel particle filter (38); a temperature $T_{41}$ in the exhaust section (12) at the inlet of the diesel particle filter (38); a pressure $p_{41}$ in the exhaust section (12) at the inlet of the diesel particle filter (38); a Lambda value $\lambda_{41}$ in the exhaust section (12) at the inlet of the diesel particle filter (38); a differential pressure $dp_{PF}$ in the exhaust section (12) between the inlet and an outlet of the diesel particle filter (38); a temperature $T_{42}$ in the exhaust section (12) at the outlet of the diesel particle filter (38); a pressure $p_{42}$ in the exhaust section (12) at the outlet of the diesel particle filter (38); a mass throughput rate $m_{42}$ in the exhaust section (12) at the outlet of the diesel particle filter (38); a temperature $T_{43}$ in the exhaust section (12) downstream of a branching of the LP-EGR line (22) from the exhaust section (12) and upstream of an $NO_x$ storage-catalytic converter; a mass throughput rate $m_{43}$ in the exhaust section (12) downstream of a branching of the LP-EGR line (22) from the exhaust section (12) and upstream of an $NO_x$ storage-catalytic converter; a Lambda value $\lambda_{43}$ in the exhaust section (12) downstream

of the $NO_x$ storage-catalytic converter and upstream of the exhaust gas valve (28); a pressure $p_{43}$ in the exhaust section (12) downstream of the exhaust gas valve (28) and upstream of a $H_2S$ catalytic converter; and/or a pressure $p_0$' in the exhaust section (12) downstream of a silencer.

7. Method according to at least one of the preceding claims, **characterized in that** at least one value which is determined from the throttle model for a specific parameter of the combustion engine is compared with a measured value for this parameter of the combustion engine, and at least one parameter of the throttle model is changed as a function of a difference between the two values in such a way that the value which is determined from the throttle model, corresponds to the measured value.

8. Method according to at least one of the preceding claims, **characterized in that** at least one value which is determined from the throttle model for a specific parameter of the combustion engine is compared with a value, determined from the throttle model in some other way, for this parameter, and at least one parameter of the throttle model is changed as a function of a difference between the two values in such a way that the difference becomes minimal.

## Revendications

1. Procédé de commande d'un moteur à combustion interne, en particulier d'un véhicule automobile, avec un conduit d'air frais (10), un conduit de gaz d'échappement (12) et un turbocompresseur à gaz d'échappement (14), qui présente un compresseur (16) disposé dans le conduit d'air frais (10) et une turbine (18) disposée dans le conduit de gaz d'échappement (12), dans lequel on prélève des gaz d'échappement hors du conduit de gaz d'échappement (12) en amont de la turbine (18) et on les renvoie par une première conduite de retour de gaz d'échappement (conduite HD-AGR 20) à un endroit en aval du compresseur (16) dans le conduit d'air frais (10) (retour de gaz d'échappement à haute pression - HD-AGR) et on prélève des gaz d'échappement hors du conduit de gaz d'échappement (12) en aval de la turbine (18) et on les renvoie par une deuxième conduite de retour de gaz d'échappement (conduite ND-AGR 22) à un endroit en amont du compresseur (16) dans le conduit d'air frais (10) (retour de gaz d'échappement à basse pression - ND-AGR), dans lequel on règle un débit pour le ND-AGR $r_{ND-AGR}$ au moyen d'une soupape ND-AGR (24), dans lequel on règle une contrepression des gaz d'échappement en aval du prélèvement des ND-AGR au moyen d'un clapet de gaz d'échappement (28) dans le conduit de gaz d'échappement (12) du moteur à combustion interne, dans lequel on détermine une valeur actuelle $r_{ND-AGR-IST}$ du débit des AGR au moyen d'un modèle d'étranglement à partir d'une différence de pression entre un endroit dans le conduit d'air frais (10) où la conduite ND-AGR (22) débouche, dans le conduit d'air frais (10) ou en amont de cet endroit, et un endroit dans le conduit de gaz d'échappement (12) où la conduite ND-AGR (22) est dérivée du conduit de gaz d'échappement (12) ou en aval de cet endroit, et dans lequel on règle le clapet de gaz d'échappement (28) de telle manière que la différence de pression dépasse, indépendamment d'un point de fonctionnement instantané du moteur à combustion interne, une valeur prédéterminée afin qu'un flux massique de gaz d'échappement désiré $\dot{m}_{ND-AGR}$ soit atteint, **caractérisé en ce que** le clapet de gaz d'échappement (28) n'est pas complètement ouvert, même dans le cas où la chute de pression naturelle pour le flux massique de gaz d'échappement désiré $\dot{m}_{ND-AGR}$ serait suffisante.

2. Procédé selon la revendication 1, **caractérisé en ce que** l'on détermine une position de soupape de la soupape ND-AGR (24) à partir d'une valeur de consigne $r_{ND-AGR-SOLL}$ et d'une valeur actuelle $r_{ND-AGR-IST}$ pour le débit des AGR $r_{ND-AGR}$.

3. Procédé selon au moins une des revendications précédentes, **caractérisé en ce que** l'on choisit la valeur prédéterminée de la différence de pression de telle manière que les pertes dues au mouvement des gaz du moteur à combustion interne descendent sous une valeur prédéterminée à cause de la position du clapet de gaz d'échappement (28).

4. Procédé selon au moins une des revendications précédentes, **caractérisé en ce que** l'on mesure des valeurs pour une température dans le conduit de gaz d'échappement (12) en aval d'un filtre à particules diesel (38) disposé dans le conduit de gaz d'échappement (12) et une pression ambiante et on détermine des valeurs pour une position de la soupape ND-AGR (24), dans lequel on envoie ces valeurs en même temps que la différence de pression au modèle d'étranglement comme grandeurs d'entrée.

5. Procédé selon au moins une des revendications précédentes, **caractérisé en ce que** l'on détermine la valeur prédéterminée pour la différence de pression à partir d'un modèle.

6. Procédé selon au moins une des revendications précédentes, **caractérisé en ce que** l'on détermine et/ou on mesure au moins un des paramètres suivants du moteur à combustion interne à partir du modèle d'étranglement, une pression $p_0$ dans le conduit d'air frais (10) en amont d'un filtre à air; une température $T_0$ dans le conduit d'air frais (10) en amont d'un filtre à air; un débit massique d'air frais $m_0$ dans le conduit d'air frais (10) en aval du filtre à air et en amont du compresseur (16); une pression $p_{01}$ dans le conduit d'air frais (10) en aval d'un HFM et en amont du compresseur (16); une température $T_1$ dans le conduit d'air frais (10) en aval du HFM et en amont du compresseur (16); une pression $p_1$ dans le conduit d'air frais (10) en aval du HFM et en amont du compresseur (16); un débit massique $m_{11}$ dans le conduit d'air frais (10) en aval du HFM et en amont du compresseur (16); une pression $p_{12}$ dans le conduit d'air frais (10) à l'entrée du compresseur (16); une pression $p_{20}$ dans le conduit d'air frais (10) à la sortie du compresseur (16); une température $T_2$ dans le conduit d'air frais (10) en aval d'un refroidisseur d'air de suralimentation (32) et en amont d'un clapet d'étranglement (34); une pression $p_2$ dans le conduit d'air frais (10) en aval d'un refroidisseur d'air de suralimentation (32) et en amont d'un clapet d'étranglement (34); un débit massique $m_{21}$ dans le conduit d'air frais (10) dans la région d'une embouchure de la conduite HD-AGR (20) dans le conduit d'air frais (10); une température $T_{22}$ dans le conduit d'air frais (10) en aval de l'embouchure de la conduite HD-AGR (20) dans le conduit d'air frais (10); une pression $p_{22}$ dans le conduit d'air frais (10) en aval de l'embouchure de la conduite HD-AGR (20) dans le conduit d'air frais (10); un débit massique $m_{22}$ dans le conduit d'air frais (10) en aval de l'embouchure de la conduite HD-AGR (20) dans le conduit d'air frais (10); une masse de remplissage de cylindre $m_f$; une température $T_3$ dans le conduit de gaz d'échappement (12) en amont de la dérivation de la conduite HD-AGR (20) à partir du conduit de gaz d'échappement (12); un débit massique $m_{31}$ dans le conduit de gaz d'échappement (12) en amont de la dérivation de la conduite HD-AGR (20) à partir du conduit de gaz d'échappement (12); une pression $p_3$ dans le conduit de gaz d'échappement (12) à la dérivation de la conduite HD-AGR (20) à partir du conduit de gaz d'échappement (12); une température $T_{32}$ dans le conduit de gaz d'échappement (12) en aval de la dérivation de la conduite HD-AGR (20) à partir du conduit de gaz d'échappement (12) et en amont de la turbine (18); un débit massique $m_{32}$ dans le conduit de gaz d'échappement (12) en aval de la dérivation de la conduite HD-AGR (20) à partir du conduit de gaz d'échappement (12) et en amont de la turbine (18); une température $T_4$ dans le conduit de gaz d'échappement (12) en aval de la turbine (18) et en amont d'un filtre à particules diesel (38); une température $T_{41}$ dans le conduit de gaz d'échappement (12) à l'entrée du filtre à particules diesel (38); une pression $p_{41}$ dans le conduit de gaz d'échappement (12) à l'entrée du filtre à particules diesel (38); une valeur de lambda $\lambda_{41}$ dans le conduit de gaz d'échappement (12) à l'entrée du filtre à particules diesel (38); une différence de pression $dp_{PF}$ dans le conduit de gaz d'échappement (12) entre l'entrée et une sortie du filtre à particules diesel (38); une température $T_{42}$ dans le conduit de gaz d'échappement (12) à la sortie du filtre à particules diesel (38); une pression $p_{42}$ dans le conduit de gaz-d'échappement (12) à la sortie du filtre à particules diesel (38); un débit massique $m_{42}$ dans le conduit de gaz d'échappement (12) à la sortie du filtre à particules diesel (38); une température $T_{43}$ dans le conduit de gaz d'échappement (12) en aval d'une dérivation de la conduite ND-AGR (22) à partir du conduit de gaz d'échappement (12) et en amont d'un catalyseur d'accumulation de $NO_x$; un débit massique $m_{43}$ dans le conduit de gaz d'échappement (12) en aval d'une dérivation de la conduite ND-AGR (22) à partir du conduit de gaz d'échappement (12) et en amont d'un catalyseur d'accumulation de $NO_x$; une valeur de lambda $\lambda_{43}$ dans le conduit de gaz d'échappement (12) en aval du catalyseur d'accumulation de $NO_x$ et en amont du clapet de gaz d'échappement (28); une pression $p_{43}$ dans le conduit de gaz d'échappement (12) en aval du clapet de gaz d'échappement (28) et en amont d'un catalyseur de $H_2S$ et/ou une pression $p_0'$ dans le conduit de gaz d'échappement (12) en aval d'un silencieux.

7. Procédé selon au moins une des revendications précédentes, **caractérisé en ce que** l'on compare au moins une valeur déterminée à partir du modèle d'étranglement pour un paramètre déterminé du moteur à combustion interne avec une valeur mesurée de ce paramètre du moteur à combustion interne et on modifie au moins un paramètre du modèle d'étranglement en fonction d'une différence entre les deux valeurs, de telle manière que la valeur déterminée à partir du modèle d'étranglement corresponde à la valeur mesurée.

8. Procédé selon au moins une des revendications précédentes, **caractérisé en ce que** l'on compare au moins une valeur déterminée à partir du modèle d'étranglement pour un paramètre déterminé du moteur à combustion interne avec une valeur déterminée d'une autre manière pour ce paramètre et on modifie au moins un paramètre du modèle d'étranglement en fonction d'une différence entre les deux valeurs, de telle manière que cette différence soit minimale.

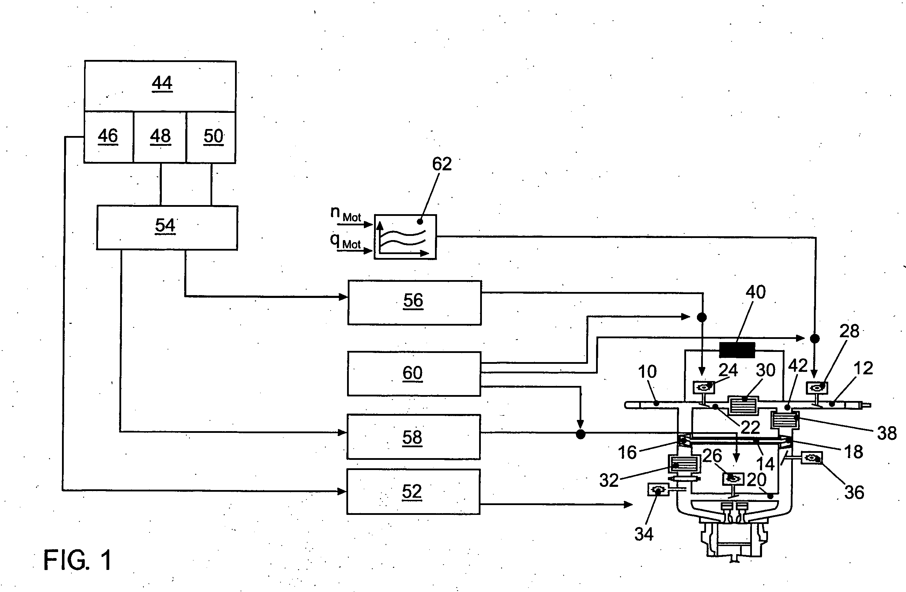

FIG. 1

**IN DER BESCHREIBUNG AUFGEFÜHRTE DOKUMENTE**

**In der Beschreibung aufgeführte Patentdokumente**

- JP 2006336547 A